# EUROPÄISCHE PATENTSCHRIFT

(11) **EP 0 890 122 B1**
(45) Veröffentlichungstag und Bekanntmachung des Hinweises auf die Patenterteilung: **25.09.2002**
(21) Anmeldenummer: 97916353.2
(22) Anmeldetag: 21.03.1997
(51) Int. Cl.: G02B 6/13, G02B 6/136, G02B 6/42

(54) **VERFAHREN ZUM HERSTELLEN EINES WELLENLEITER-STRAHLUMSETZERS**
PROCESS FOR MANUFACTURING A WAVEGUIDE BEAM CONVERTER
PROCEDE POUR FABRIQUER UN CONVERTISSEUR DE FAISCEAU DE GUIDE D'ONDES

(30) Priorität: 29.03.1996 DE 19612673
(43) Veröffentlichungstag der Anmeldung: 13.01.1999
(73) Patentinhaber: Osram Opto Semiconductors GmbH & Co. OHG, 93049 Regensburg (DE)
(72) Erfinder: SCHNEIDER, Hartmut, D-81927 München (DE); SPÄTH, Werner, D-83607 Holzkirchen (DE); GRÖTSCH, Stefan, D-93053 Regensburg (DE)
(74) Vertreter: Epping, Wilhelm, Dipl.-Ing.
(86) Internationale Anmeldenummer: DE9700579
(87) Internationale Veröffentlichungsnummer: WO97037257

(56) Entgegenhaltungen:
- EP-A- 0 451 018
- WO-A-90/14316
- US-A- 5 343 546
- SENSORS AND ACTUATORS A, Bd. A49, Nr. 1/02, 1.Juni 1995, Seiten 109-113, XP000545390 ENG T T H ET AL: "SURFACE-MICROMACHINED EPITAXIAL SILICON CANTILEVERS AS MOVABLE OPTICAL WAVEGUIDES ON SILICON-ON-INSULATOR SUBSTRATES"
- IEEE PHOTONICS TECHNOLOGY LETTERS, Bd. 4, Nr. 6, 1.Juni 1992, Seiten 630-632, XP000275551 SUN C J ET AL: "HIGH SILICA WAVEGUIDES ON ALUMINA SUBSTRATES FOR HYBRID OPTOELECTRONIC INTEGRATION"

## Beschreibung

Verfahren zum Herstellen eines Wellenleiter-Strahlumsetzers und Verfahren zum Herstellen mindestens eines Wellenleiters

Die Erfindung bezieht sich auf ein Verfahren zum Herstellen eines Wellenleiter-Strahlumsetzers gemäß dem Oberbegriff des Anspruches 1 und auf ein Verfahren zum Herstellen mindestens eines Wellenleiters auf einem Substrat, der zumindest über einen ersten Teil seiner Länge von dem Substrat abgelöst ist, gemäß dem Oberbegriff des Patentanspruches 5.

Das erfindungsgemäße Verfahren dient insbesondere zum Herstellen eines Wellenleiter-Strahlumsetzers zur Erhöhung der Strahlungsdichte eines von einem Laserdioden-Barren abgestrahlten Laserstrahlenbündels.

Einzelne Halbleiterlaserdioden stellen bekanntlich Strahlungsquellen mit hoher Strahlungsdichte dar. Physikalisch bedingt ergeben sich jedoch für Halbleiterlaser-Strahlungsquellen mit hoher Strahlungsleistung wesentliche Beschränkungen. Laserdioden geben nämlich streifenförmige Einzellaserstrahlen ab, so daß zur Erzeugung eines kompakten Laserstrahlenbündels mit hoher Strahlungsleistung die streifenförmigen Einzellaserstrahlen übereinander angeordnet werden müssen. Aufgrund der hohen Verlustleistung von Halbleiterlaserdioden ist jedoch die Packungsdichte von Einzellaserdioden begrenzt. Es ist daher erforderlich, die von einer Mehrzahl von Einzellaserdioden abgestrahlten Einzellaserstrahlen beispielsweise mittels eines Wellenleiter-Strahlumsetzers zu bündeln.

Ein solcher Wellenleiter-Strahlumsetzer ist beispielsweise aus der internationalen Patentanmeldung WO 94/152 34 bekannt. Hierin ist eine Lichtleitfaseranordnung aus einer Mehrzahl von gekrümmten rechteckigen Lichtleitfasern beschrieben, mittels derer ein von einem Laserdiodenbarren abgestrahltes Eingangs-Laserstrahlenbündel aus nebeneinander angeordneten Einzellaserstrahlen in ein Ausgangs-Laserstrahlenbündel aus übereinander angeordneten streifenförmigen Einzellaserstrahlen umgeformt wird. Die Lichtleitfasern sind eingangsseitig in einer Reihe nebeneinander angeordnet, so daß jeder Einzellaserstrahl des Eingangs-Laserstrahlenbündels in eine separate Lichtleitfaser eingekoppelt wird. Ausgangsseitig sind die Lichtleitfasern in Form eines Stapels übereinander angeordnet, so daß von den Endflächen der Lichtleitfasern ein im Querschnitt rechteckiges Ausgangs-Laserstrahlenbündel abgestrahlt wird. Dieses Ausgangs-Laserstrahlenbündel wird nachfolgend durch eine Kugellinse hindurch in einem im Querschnitt kreisförmigen Faserlaser eingekoppelt.

Die Lichtleitfasern sind eingangsseitig in Präzisionsnuten eines Justierblockes befestigt, die derart ausgebildet sind, daß die Anordnung und der Abstand der Lichtleitfasern untereinander der Anordnung und dem Abstand der eingekoppelten Einzellaserstrahlen entspricht. Die Lichtleitfasern bestehen aus alkali- oder erdalkalihaltigen Silikatgläsern (Weichglas) wie beispielsweise BAK 5 für den Faserkern und BAK 2 für den Fasermantel, der wiederum von einem beispielsweise aus LAKN 12 gefertigten Stützmantel umgeben ist. Die Herstellung des Lichtleitfaserbündels erfolgt in folgenden Schritten:

Zunächst wird der Faserkern mit dem Fasermantel hergestellt. Nachfolgend wird der Fasermantel mit dem Material des Stützmantels umhüllt, das eine bedeutend höhere Ätzrate als das Material des Fasermantels aufweist. Bevor das Stützmantelmaterial anschließend bis auf eine dünne Stützmantelschicht abgeätzt wird, wird der oben beschriebene Verbund aus Faserkern, Fasermantel und Stützmantelschicht derart ausgezogen, daß der Querschnitt des Faserkerns nach dem Ausziehen noch etwas größer ist als das vorgesehene Endmaß.

Eine Anzahl der so hergestellten Lichtleitfasern werden dann übereinandergestapelt und miteinander verbunden. Der Stapel wird dann nochmals mit einer Umhüllung versehen und anschließend erneut ausgezogen, bis der Stapel die gewünschte Geometrie aufweist. Die Lichtleitfasern des Stapels werden nachfolgend an einem Ende des Stapels mittels Ätzen wieder vereinzelt, nebeneinander in den Präzisionsnuten des Justierblocks befestigt und derart ausgebildet, daß die vom Laserdiodenbarren abgestrahlten Einzellaserstrahlen in die Faserenden eingekoppelt werden können.

Wie aus der obigen Beschreibung ersichtlich ist, ist bislang die Herstellung eines Wellenleiter-Strahlumsetzers der eingangs genannten Art sehr aufwendig und kompliziert und folglich sehr kostenintensiv.

Verfahren zum Herstellen von Wellenleitern auf einem Substrat, die zumindest über einen ersten Teil ihrer Länge von dem Substrat abgelöst sind, sind beispielsweise aus Eng T. T. H. et al., Sensors and Actuators A 49 (1995) 109 - 113, und aus EP 451 018 A1 bekannt. Mit diesen Verfahren ist es jedoch schwierig, eine sichere Abtrennung der Wellenleiter zu erzielen. Eine solche ist jedoch für eine Massenfertigung von derartigen Wellenleitern unabdingbar ist.

Die Aufgabe der Erfindung besteht darin, ein Verfahren zum Herstellen eines Wellenleiter-Strahlumsetzers zu entwickeln, das einfach durchführbar ist und das es erlaubt, auf einfache Weise gleichzeitig eine Mehrzahl von Wellenleiter-Strahlumsetzern herzustellen.

Diese Aufgabe wird durch ein Verfahren der eingangs genannten Art mit den Kennzeichen des Anspruches 1 gelöst. Ein besonders vorteilhaftes Verfahren zum Herstellen mindestens eines Wellenleiters auf einem Substrat, der zumindest über einen ersten Teil seiner Länge von dem Substrat abgelöst ist, ist Gegenstand des Patentanspruches 5.

Der Vorteil des erfindungsgemäßen Verfahrens zum Herstellen eines Wellenleiter-Strahlumsetzers besteht insbesondere darin, daß nur wenige aus der Planartechnik bekannte Verfahrensschritte nötig sind, die auf einfache Weise ausführbar sind.

Außerdem können bei dem erfindungsgemäßen Verfahren vorteilhafterweise Wellenleiter aus optisch hochwertigen Gläser auf einem Substrat bedarfsgerecht hergestellt werden. Die Glaszusammensetzungen können dem speziellen Zweck angepaßt werden. Strahlungsverluste im Wellenleiter-Strahlumsetzer können somit gering gehalten werden.

Des weiteren ist es mit dem erfindungsgemäßen Verfahren auf einfache Weise durch Variation der Glaszusammensetzungen möglich, die Glaseigenschaften den vom Gesamtsystem vorgegebenen Randbedingungen anzupassen.

Ein besonderer Vorteil dieses Herstellungsverfahrens besteht darin, daß das Laserdiodenfeld, beispielsweise ein Laserdiodenbarren oder eine Mehrzahl von Einzellaserdiodenchips, auf demselben Substrat aufgebracht werden kann wie der Wellenleiter-Strahlumsetzer. Ebenso können auf diesem Substrat auch Koppeloptiken zum Einkoppeln des Eingangs-Laserstrahlenbündels in den Wellenleiter-Strahlumsetzer und/oder Koppeloptiken zum Einkoppeln des Ausgangs-Laserstrahlenbündels in eine einzelne Lichtleitfaser, einen weiteren Laser oder in eine andere Vorrichtung angeordnet sein. Dadurch ist erreicht, daß sowohl das Laserdiodenfeld als auch ggf. notwendige Koppeloptiken auf einfache Weise exakt zum Wellenleiter-Strahlumsetzer justiert montiert werden kann bzw. können. Dazu können beispielsweise Positionsgruben oder -kanten in oder auf dem Substrat hergestellt sein.

Von Vorteil ist weiterhin, daß die Wellenleiter aus einem SiO₂-Glas hergestellt werden können, das mehr als 50 Kation% SiO₂ aufweist. Derartige Gläser haben eine hohe optische Qualität. Dadurch können die Strahlungsverluste im Wellenleiter-Strahlumsetzer, d. h. sowohl im lichtführenden Wellenleiterkern als auch an der Grenzfläche zwischen dem Wellenleiterkern und dem Wellenleitermantel niedrig gehalten werden. Ein wesentlicher Vorteil der o. g. SiO₂-Gläser ist, daß sie durch Gasphasenabscheidung hergestellt werden können, wodurch die Herstellung von Glasschichten auf einem Substrat wesentlich erleichtert ist. Einzelne Glasschichten können ohne große Schwierigkeiten blasenfrei und schlierenfrei exakt übereinandergelegt hergestellt werden, wodurch störungsfreie und damit optisch hochwertige Grenzflächen entstehen. Von weiterem Vorteil ist auch, daß diese Gläser durch Gasphasenätzverfahren wieder entfernt werden können.

Ebenso ist es vorteilhafterweise mit dem erfindungsgemäßen Verfahren auf einfache Weise möglich, einen Wellenleiter-Strahlumsetzer herzustellen, bei dem die Wellenleiter derart angeordnet sind, daß aus ihnen eine Mehrzahl von Ausgangs-Laserstrahlenbündeln auskoppelbar sind. Dadurch kann vorteilhafterweise das von einem Laserdiodenfeld abgestrahlte Eingangs-Laserstrahlenbündel in eine Mehrzahl von rechteckigen Ausgangs-Laserstrahlenbündeln umgeformt werden, die dann wiederum sehr effizient in Wellenleiter mit rundem Querschnitt eingekoppelt werden können.

Bei dem erfindungsgemäßen Verfahren zum Herstellen eines Wellenleiters auf einem Substrat, der zumindest über einen ersten Teil seiner Länge von dem Substrat abgelöst ist und über einen zweiten Teil seiner Länge mit dem Substrat verbunden ist (Patentanspruch 5), ist von besonderem Vorteil, daß ausschließlich aus der Planartechnik bekannte Verfahrensschritte verwendet werden, die in herkömmlichen Fertigungslinien der Halbleitertechnik durchführbar sind. Bevorzugte Ausführungsformen diese Verfahrens sind Gegenstand der Patentansprüche 6 und 7.

Die Erfindung wird im folgenden anhand eines Ausführungsbeispieles in Verbindung mit den Figuren 1 bis 4 näher erläutert. Es zeigen:
- Figur 1: eine schematische perspektivische Darstellung eines Wellenleiter-Strahlumsetzers, der nach dem erfindungsgemäßen Verfahren hergestellt ist,
- Figur 2: eine schematische Darstellung einer Seitenansicht eines Wellenleiter-Strahlumsetzers, der nach dem erfindungsgemäßen Verfahren herstellt ist und der eingangsseitig an ein Laserdiodenfeld und ausgangsseitig an eine eine Lichtleitfaser optisch angekoppelt ist,
- Figur 3: eine schematische Darstellung einer Draufsicht einer zweiten Ausführungsform eines Wellenleiter-Strahlumsetzers, der nach dem erfindungsgemäßen Verfahren hergestellt ist,
- Figur 4: eine schematische Darstellung eines Ablaufes des erfindungsgemäßen Verfahrens.

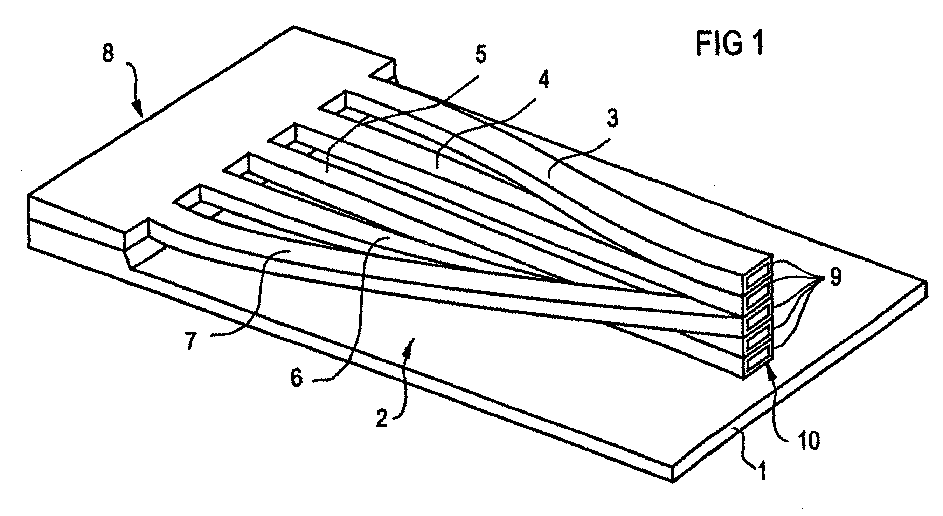

Bei der in Figur 1 dargestellten Anordnung ist auf einem Substrat 1, beispielsweise ein Silizium-Substrat, ein Wellenleiter-Strahlumsetzer 2 angeordnet, der z. B. aus 5 Wellenleitern 3 bis 7 besteht. Auf der Seite der Strahleingangsenden 8 sind die Wellenleiter 3 bis 7 nebeneinander auf dem Substrat 1 aufliegend angeordnet. Die Wellenleiter 3 - 7 sind über eine Teillänge 27 von dem Substrat abgelöst und auf der Seite der Strahlausgangsenden 9 sind die Wellenleiter 3 - 7 zu einem aus übereinander angeordneten Wellenleiterenden bestehender Stapel 10 zusammengeführt und fixiert.

In die Strahleintrittsenden 8 der Wellenleiter 3 bis 7 sind die Einzellaserstrahlen eines Laserdiodenfeldes 11, z. B. eines Laserdiodenbarrens, einkoppelbar, die jeweils beispielsweise einen streifenförmigen Querschnitt aufweisen. Die Einzellaserstrahlen können aus einem einzelnen Laserstrahl oder aus einer Mehrzahl von einzelnen im Querschnitt kleineren Laserstrahlen bestehen. Ein im Querschnitt streifenförmiger Einzellaserstrahl kann eine Strahlbreite von etwa 200µm und einer Strahlhöhe von etwa 2µm aufweisen.

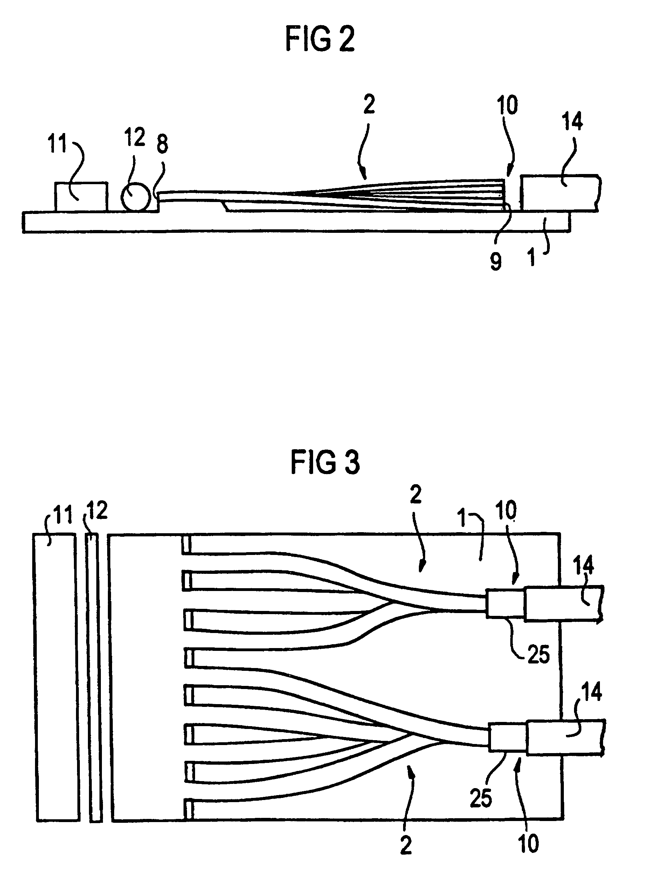

Zwischen dem Laserdiodenfeld 11 und den Lichteintrittsenden 8 kann eine Strahlenparallelisierungsoptik 12 (Figur 2) wie beispielsweise eine Zylinderlinse oder eine Beugungsoptik angeordnet sein, die eine vertikale Divergenz der Einzellaserstrahlen zumindest verringert. Die Abmessungen der Wellenleiter 3 bis 7 sind an die Abmessungen der einzukoppelnden Einzellaserstrahlen angepaßt.

Aus den als Stapel 10 angeordneten Strahlaustrittsenden 9 ist ein rechteckiges Ausgangs-Laserstrahlenbündel auskoppelbar, das beispielsweise durch eine Kugellinse hindurch oder direkt in einen im Querschnitt z. B. kreisförmigen Wellenleiter 14, in einen Faserlaser oder in einen anderen Laser einkoppelbar ist.

Wie in Figur 3 gezeigt, können mit dem erfindungsgemäßen Verfahren ebenso Wellenleiter-Strahlumsetzer 2 hergestellt werden, mit denen ein Eingangs-Laserstrahlenbündel aus einer Mehrzahl von Einzellaserstrahlen zu einer Mehrzahl von Ausgangs-Laserstrahlenbündeln, jeweils bestehend aus einer Anzahl von Einzellaserstrahlen, umgeformt werden kann. Die Enden der Wellenleiterbündel sind bei dieser Ausführungsform beispielsweise in Hülsen 25 eingefädelt, was natürlich auch bei sämtlichen anderen Ausführungsformen möglich ist.

Der Wellenleiter-Strahlumsetzer 2 kann natürlich sowohl bei der in Figur 1 als auch bei der in Figur 3 dargestellten Ausführungsform für eine beliebige Anzahl von Einzellaserstrahlen ausgelegt sein. Es muß dann lediglich die Anzahl der Wellenleiter an die Anzahl der Einzellaserstrahlen angepaßt werden.

Das erfindungsgemäße Verfahren läuft allgemein wie folgt ab:

Zunächst wird auf einem Substrat 1, z. B. auf einem Silizium-Substrat, eine Anzahl von Wellenleitern 3 - 7 (z. B. bestehend aus SiO₂-Glas mit ≥ 50 Kation% SiO₂) in Form eines Feldes aus geradlinigen Streifen mit Methoden der Planartechnik hergestellt. Der Querschnitt, der Akzeptanzwinkel und der Abstand der Wellenleiter 3 - 7 werden dabei exakt an die Charakteristik des Eingangs-Laserstrahlenbündels angepaßt. Die Wellenleiter 3 bis 7 werden dann ausgehend von ihren Strahlaustrittsenden 9 über eine Teillänge 27 mittels einer geeigneten Ätztechnik gegebenenfalls unter Erhalt ihrer Querschnittsform vom Substrat 1 abgelöst. Die freien Teillängen 27 der Wellenleiter 3 bis 7 werden nun unter Vermeidung von zu geringen Biegeradien aus einer Strahlebene des Eingangs-Laserstrahlenbündels heraus versetzt und zu einem Stapel 10 gebündelt. Dieser Stapel 10 kann eine rechteckige, parallelogrammförmige oder eine andere für den entsprechenden Zweck geeignete Querschnittsform aufweisen.

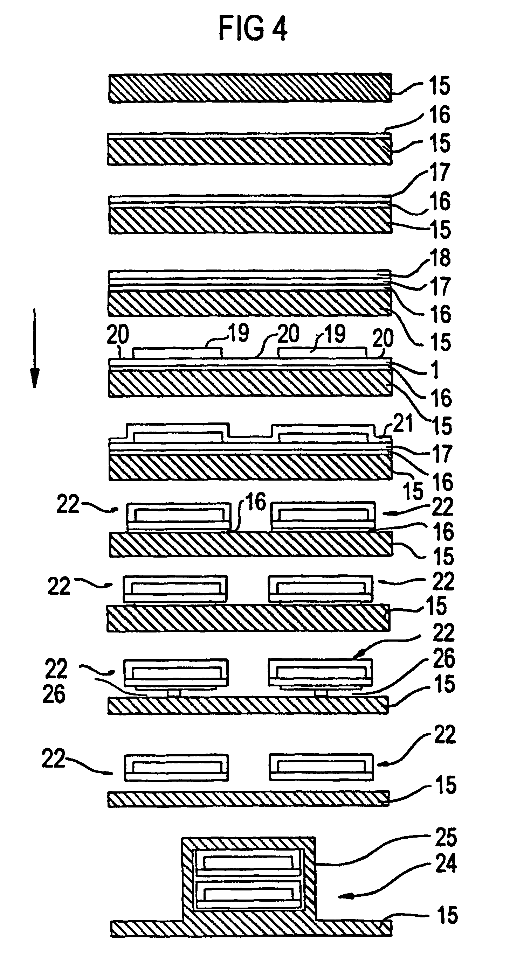

Bei dem in Figur 4 schematisch dargestellten detaillierten Ablauf eines erfindungsgemäßen Verfahrens wird zunächst auf einer (100)-Siliziumscheibe 15 eine Trennschicht 16 aufgebracht, die z. B. aus reinem SiO₂, aus SiO₂-GeO₂-Glas oder aus SiO₂-P₂O₅-Glas besteht und eine Dicke von etwa 0,75 - 3 µm aufweist. Nachfolgend wird auf die Trennschicht 16 eine erste Mantelglasschicht 17 und auf diese eine Kernschicht 18 aufgebracht. Die erste Mantelglasschicht 17 besteht beispielsweise aus SiO₂-Glas mit ≥ 50 Kation% SiO₂, wobei die restlichen Kationen vorzugsweise aus der Gruppe B, Ge, P, Ti ausgewählt werden. Geeignet ist insbesondere ein Glas mit folgender Zusammensetzung: 20 - 35 Kation% BO_{1.5}/0,7 - 1,2 Kation% GeO₂/64 - 78 Kation% SiO₂. Die erste Mantelglasschicht 17 hat z. B. eine Dicke von etwa 5 bis 10 µm. Die Kernschicht 18 besteht beispielsweise ebenfalls aus SiO₂-Glas mit ≥ 50 Kation% SiO₂, wobei die restlichen Kationen vorzugsweise aus der Gruppe B, Ge, P, Ti ausgewählt werden, der Ge- und/oder der Ti-Gehalt jedoch deutlich höher ist als in der Mantelglasschicht 17. Geeignet ist insbesondere ein Glas mit folgender Zusammensetzung: 15 - 20 Kation% BO_{1.5}/ 8 - 18 Kation% GeO₂/ 60 - 75 Kation% SiO₂. Durch die Erhöhung des Ge- und/oder des Ti-Gehalts erzielt man eine gegenüber der ersten Mantelglasschicht 17 erhöhte Brechzahl, entsprechend der erwünschten numerischen Apertur. Die Kernschicht 18 wird dann mittels Fotolithographie in Verbindung mit Trocken- und/oder Naßätzung strukturiert. Dadurch wird die Breite, die Länge und der Abstand der Wellenleiterkerne 19 untereinander festgelegt. Diese Maße sind den Abmessungen des Laserdiodenfeldes 11 und der Charakteristik des Eingangs-Laserstrahlenbündels angepaßt.

Auf die auf der ersten Mantelglasschicht 17 verbliebenen Wellenleiterkerne 19 und die freien Oberflächen 20 der Mantelglasschicht 17 wird nun eine zweite Mantelglasschicht 21 aufgebracht, die aus SiO₂-Glas mit ≥ 50 Kation% SiO₂ besteht, wobei die restlichen Kationen vorzugsweise aus der Gruppe B, Ge, P, Ti ausgewählt werden. Geeignet ist insbesondere ein Glas mit folgender Zusammensetzung: 20 - 35 Kation%. BO_{1.5}/0,7 - 1,2 Kation% GeO₂/64 - 78 Kation% SiO₂. Die zweite Mantelglasschicht 21 weist z. B. eine Dicke von 5 bis 10 µm auf.

Als Herstellungsverfahren für die einzelnen Glasschichten eignet sich beispielsweise die Flammenhydrolyse, ein in der Lichtwellenleitertechnik bekanntes Verfahren, das besonders für die Herstellung dicker Glasschichten (Dicke ≥ 5µm) geeignet ist. Ebenso kann aber auch ein anderes dem Fachmann als geeignet bekanntes Verfahren eingesetzt werden.

Vor dem Freiätzen der Wellenleiter wird zunächst ein Teil der zwischen den Wellenleiterkernen 19 liegenden Mantelglasschichten 17, 21 und die Trennschicht 16 entfernt, derart, daß auf dem Siliziumscheibe 15 eine Anzahl von vollständig mit einer Mantelglasschicht 17, 21 umgebene Wellenleiterkerne 19 zurückbleiben und daß zwischen diesen die Siliziumscheibe 15 freiliegt.

Das Ablösen der Wellenleiter über einen Teil ihrer Länge läuft folgendermaßen ab:
Optional wird zunächst von beiden Seiten der Wellenleiter 22 ein Teil der zwischen der ersten Mantelglasschicht 17 und der (100)-Siliziumscheibe 15 liegenden Trennschicht 16 entfernt, beispielsweise mittels Ätzen mit einer NH₄F/HF-Ätzmischung. Dies hat sich zur Initiierung der Ätzung der (100)-Siliziumscheibe 15 als günstig erwiesen. Ebenfalls als günstig erwiesen hat sich, die Zusammensetzung der Trennschicht 16 so zu wählen, daß sie sich schneller ätzen läßt als die benachbarten Materialien, mindestens jedoch schneller als die über der Trennschicht 16 liegende erste Mantelglasschicht 17. Dies wird beispielsweise dadurch erreicht, daß die Glasschichten der Wellenleiter aus B₂O₃-SiO₂-Glas bestehen, das sich in einer NH₄F/HF-Ätzmischung langsamer löst als B₂O₃-freies SiO₂-Glas. Es gilt: Je höher der B-Gehalt, desto geringer die Ätzrate.

Durch dieses teilweise Wegätzen der Trennschicht 16 wird die Oberseite der Siliziumscheibe unterhalb der Wellenleiter 22 teilweise freigelegt. Dieser Trennätzschritt kann mehrfach während der Wegätzung des (100)-Siliziums unterhalb der Wellenleiter 22, abwechselnd mit dieser wiederholt werden. Durch das Wegätzen der Trennschicht 16 kann verhindert werden, daß Bereiche mit geringerer Ätzrate, wie beispielsweise (111)-Flächen, die von oben als Spitzen unter der Glasfront auftreten können, ein störendes Zurückbleiben der Ätzfront unterhalb der Wellenleiter bewirken.

Im Anschluß an das Wegätzen der Trennschicht 16 wird dann mittels eines geeigneten Ätzmittels (z. B. KOH-Lösung, ca. 50 Gew.%, 50°C) unterhalb der Wellenleiter 22 das (100)-Silizum derart entfernt, daß die Wellenleiter 22 über einen Teil ihrer Länge von der Siliziumscheibe 15 abgelöst sind (selektives Ätzen mit einem Ätzratenverhältnis v((100)-Si):v(B-dotiertes SiO₂-Glas ≈ 80:1). Die Wellenleiter 22 sind parallel zur (100)-Richtung auf der Oberfläche der Siliziumscheibe 15 angeordnet, damit sich zwischen den Wellenleitern und der Siliziumscheibe 15 ein U-förmiger Graben 26 ausbilden kann. Idealerweise besitzt dieser Graben 26 exakt vertikale Begrenzungsflächen.

Anstelle einer (100)-Silizumscheibe 15 kann beispielsweise auch eine (110)-Siliziumscheibe oder eine andere Halbleiterscheibe verwendet werden. Die Orientierung der Wellenleiter 22, die Zusammensetzungen der einzelnen Glasschichten sowie die Ätzmittel müssen dann natürlich den jeweiligen Gegebenheiten angepaßt werden.

Einen kritischen Punkt des Herstellungsverfahrens stellt der Spannungszustand der Trennschicht 16 dar. Steht die Trennschicht 16 relativ zum Glas der Wellenleiter 22 unter Zugspannung (Trennschicht besitzt einen größeren thermischen Ausdehnungskoeffizienten als die darüberliegende Mantelglasschicht 17), so kann dies zum Bruch beim Ablösen vom Substrat führen. Steht sie unter Druckspannung (z. B. Trennschicht aus reinem SiO₂), so ist diese Gefahr geringer. Eine derartige Trennschicht 16 muß eine ausreichende Dicke besitzen, damit Ablösungsrisse in ihr nicht in die unter Zug stehenden Glasschichten der Wellenleiter 22 eindringen, was ebenfalls zu einer Schädigung der Wellenleiter 22 führen kann. Eine Schicht von 0,75µm - 3µm Dicke aus SiO₂-GeO₂-Glas oder SiO₂-P₂O₅-Glas erfüllt die genannten Anforderungen. Sie kann entweder direkt auf das Substrat durch Flammenhydrolyse aufgebracht werden oder durch ein 2-Schichtsystem aus 200nm thermischem SiO₂ gefolgt von 1 - 3µm SiO₂-GeO₂-Glas angenähert werden.

Als weitere Möglichkeit kann als Trennschicht 16 auch eine Gradientenschicht ausgebildet sein. Dabei läßt man zunächst eine dünne (z. B. 750nm dicke) Si-Oxidschicht aufwachsen. Danach wird die erste Mantelglasschicht 17, der GeO₂ beigefügt ist, auf die Oxidschicht aufgebracht. Durch eine Temperaturbehandlung im weiteren Prozeßverlauf bei beispielsweise 1200°C diffundiert Ge in die SiO₂ Schicht. Die Trennschicht 16 wird während dieser Prozedur aufgebraucht oder nach der KOH-Ätzung in einem NH₄F/HF-Reinigungsätzschritt entfernt. Über die nicht freigeätzte Länge der Wellenleiter 22 bleibt die Trennschicht 16 erhalten.

Zur weiteren Optimierung des Spannungsaufbaus in den Wellenleitern 22 und zur Verringerung der Bruchgefahr kann die Zusammensetzung im Dreiphasensystem SiO₂-B₂O₃-GeO₂ so gesteuert werden, daß unter Einhaltung der gewünschten Brechzahlen der Kernglasschicht 18 und der Mantelglasschichten 17, 21 der thermische Ausdehnungskoeffizient von der ersten Mantelglasschicht 17 über die Kernglasschicht 18 bis zur zweiten Mantelglasschicht 21 hin ansteigt. Optional kann dem o. g. Dreiphasensystem TiO₂ oder P₂O₅ zugegeben werden. Der Ausdehnungskoeffizient der zweiten Mantelglasschicht 21 ist dann dem der Siliziumscheibe 15 am nächsten. Dies kann bei Brechzahlkompensation durch GeO₂ über eine Erhöhung des B₂O₃-Gehalts oder des P₂O₅-Gehalts erfolgen. Derart hergestellte Wellenleiter 22 weisen im freigeätzten Zustand eine definierte Krümmung nach oben auf. Während der Endphase des Ablösevorgangs der Wellenleiter 22 können dadurch Abrisse weniger leicht zu einer Bruchkatastrophe führen.

Da bei hinreichender Nachätzzeit in KOH und/oder NH₄/HF Ablösungsrisse verrunden und verschwinden, ist eine ausreichende Endfestigkeit der Wellenleiter 22 ohne weiteres erreichbar. Zur weiteren Kantenverrundung kann jedoch auch ein Nachtempern bei Temperaturen von ungefähr 800°C erfolgen.

Zur Arretierung und Verklebung/Verlötung der Strahlaustrittsenden der Wellenleiter 22, d. h. zum Beispiel des oder der Faserstapel 24, sowie zur Konfektionierung der Strahlaustrittsenden kann eine L-oder U-förmige oder eine geschlossene Hülse 25 verwendet werden, in die die freigeätzten, nach oben gekrümmten Wellenleiter 22 z. B. durch Einfädeln eingeführt werden.

Die Strahlaustrittsenden der Wellenleiter 22 können abgesägt und poliert oder mit einer Antireflexschicht versehen und entspiegelt werden. Gleiches gilt für die Strahleintrittsenden der Wellenleiter22.

Zur Vermeidung von Alterungsseffekten (Spannungsrißkorrosion) kann auf die Wellenleiter 22 eine Schutzschicht aufgebracht werden, die z. B. aus einem Glas mit hohem Si-Anteil oder aus Siliziumnitrid (diese ist mit Plasmaverfahren herstellbar) bestehen und eine Dicke von ca. 2 µm aufweisen kann.

Die Trennschicht 16 hat neben der oben genannten Funktion die Aufgabe, den Si-Kristall gegen Eindiffusion von Verunreinigungen zu schützen, die eine Änderung der Ätzrate von Silizium bewirken könnten. Bor-Diffusion aus den übergeordneten Glasschichten (Mantelglasschichten 17, 21 und Kernschicht 18) führt beispielsweise zu einer drastischen Verringerung der Si-Ätzrate in KOH, so daß ein Ablösen der Wellenleiter 22 praktisch verhindert wird. Die Trennschicht 16 muß daher zumindest an der Grenze zur Siliziumscheibe frei von Dotierstoffen sein, die die Silizium-Ätzrate verringern.

Mit dem oben beschriebenen Verfahren ist es vorteilhafterweise durch Variation der Glaszusammensetzungen möglich, die Glaseigenschaften den vom Gesamtsystem vorgegebenen Randbedingungen anzupassen. Die Schichtdicken und die numerische Apertur der Wellenleiter kann im Herstellungsprozeß rasch dem Eingangs-Laserstrahlenbündel angepaßt werden.

Ein weiterer Vorteil des erfindungsgemäßen Verfahrens besteht darin, daß die Abstände zwischen den Wellenleiter auf dem Substrat durch photolithographische Methoden einfach an das Rastermaß des Laserdiodenfeldes angepaßt werden können.

## Patentansprüche

1. Verfahren zum Herstellen eines Wellenleiter-Strahlumsetzers zum geometrischen Umformen eines von einem Laserdiodenfeld abgestrahlten, eine Anzahl von Einzellaserstrahlen aufweisenden Eingangslaserstrahlenbündels mit einem Eingangs-Strahlenmuster, bei dem eine Anzahl von Wellenleitern (3-7) derart hergestellt und angeordnet wird, daß in jeden Wellenleiter (3-7) mindestens ein Einzellaserstrahl einkoppelbar ist und bei dem die Wellenleiter (3-7) derart geformt und angeordnet werden, daß aus ihnen ein Ausgangslaserstrahlenbündel mit einem Ausgangs-Strahlenmuster auskoppelbar ist, **dadurch gekennzeichnet, daß** die Wellenleiter (3-7) zunächst mittels Planartechnik auf einem Substrat (1,15) hergestellt werden und daß nachfolgend mindestens einer der Wellenleiter (3-7) ausgehend von seinem Strahlaustrittsende (9) über einen Teil seiner Länge von dem Substrat (1,15) abgelöst, und entsprechend dem Ausgangs-Strahlenmuster des Ausgangslaserstrahlenbündels gekrümmt und fixiert wird.

2. Verfahren nach Anspruch 1, **dadurch gekennzeichnet, daß** das Laserdiodenfeld (11) und/oder eine Anzahl von Koppeloptiken (12) zum Formen der Einzellaserstrahlen des Eingangslaserstrahlenbündels oder zum Formen des Ausgangslaserstrahlenbündels auf demselben Substrat (1,15) wie die Wellenleiter (3-7) angebracht wird.

3. Verfahren nach Ansüpruch 1 oder 2, **dadurch gekennzeichnet, daß** die Wellenleiter (3-7) aus einem Glas hergestellt werden, das mehr als 50 Kation% SiO2 aufweist.

4. Verfahren nach einem der Ansprüche 1 bis 3, **dadurch gekennzeichnet, daß** eine Anzahl von Wellenleitern (3-7) zumindest über einen ersten Teil ihrer Länge von dem Substrat (1,15) abgelöst werden und über einen zweiten Teil ihrer Länge mit dem Substrat (1,15) verbunden bleiben, wobei die jeweils gegen den zweiten Teil beweglichen ersten Teile der jeweiligen Wellenleiter mit den folgenden Verfahrensschritten erzeugt werden:
a) Herstellen des Substrats (1,15),
b) Aufbringen einer Trennschicht (16) auf das Substrat (1),
c) Aufbringen einer ersten Mantelglasschicht (17) auf die Trennschicht (16),
d) Aufbringen einer Kernschicht (18) auf die erste Mantelglasschicht (17),
e) Strukturieren der Kernschicht (18), so daß eine Anzahl von voneinander getrennten Wellenleiterkernen (19) auf der ersten Mantelglasschicht (17) verbleiben,
f) Aufbringen einer zweiten Mantelglasschicht (21) auf die Wellenleiterkerne (19) und auf die freien Teilbereiche (20) der ersten Mantelglasschicht (17) zwischen den Wellenleiterkernen (19), derart, daß die Wellenleiterkerne (19) vollständig von den Mantelglasschichten (17, 21) umgeben sind,
g) Entfernen eines Teiles der zwischen den Wellenleiterkernen (19) liegenden ersten und zweiten Mantelglasschichten (17, 21), derart, daß eine Anzahl von voneinander getrennten Wellenleitern (22) auf dem Substrat (1,15) verbleibt und daß jeder Wellenleiter (22) einen vollständig von den Mantelglasschichten (17, 21) umgebenen Wellenleiterkern (19) aufweist, und
h) Ablösen der Wellenleiter (22) vom Substrat (15) über den ersten Teil ihrer Länge.

5. Verfahren zum Herstellen mindestens eines Wellenleiters (22) auf einem Substrat (15), der zumindest über einen ersten Teil seiner Länge von dem Substrat (15) abgelöst ist und über einen zweiten Teil seiner Länge mit dem Substrat (15) verbunden ist, **dadurch gekennzeichnet, daß** der gegenüber dem zweiten Teil seiner Länge bewegliche erste Teil des Wellenleiters (20) mit den folgenden Verfahrensschritten erzeugt wird:
a) Herstellen des Substrats (15),
b) Aufbringen einer Trennschicht (16) auf das Substrat (15),
c) Aufbringen einer ersten Mantelglasschicht (17) auf die Trennschicht (16),
d) Herstellen eines Wellenleiterkerns (19), bestehend aus einer Kernschicht (18), auf der ersten Mantelglasschicht (17),
e) Aufbringen einer zweiten Mantelglasschicht (21) auf den Wellenleiterkern (19) und auf freie Teilbereiche (20) der ersten Mantelglasschicht (17) neben dem Wellenleiterkern (19), derart, daß der Wellenleiterkern (19) vollständig von der ersten und der zweiten Mantelglasschicht (17, 21) umgeben ist,
f) zumindest teilweises Entfernen der Trennschicht (16) zwischen der ersten Mantelglasschicht (17) und dem Substrat (15) und
g) Entfernen des Substratmaterials unterhalb des von den Mantelglasschichten (17, 21) und dem Wellenleiterkern (19) gebildeten Wellenleiters (20) über den ersten Teil seiner Länge, so daß dieser über diese Länge vom Substrat (15) abgelöst ist.

6. Verfahren nach Anspruch 5 zum gleichzeitigen Herstellen einer Mehrzahl von Wellenleitern auf einem Substrat (15), **dadurch gekennzeichnet, daß** bei Schritt d auf der ersten Mantelglasschicht (17) eine Mehrzahl von nebeneinander angeordneten Wellenleiterkernen (19) hergestellt wird, daß nach dem Aufbringen der zweiten Mantelglasschicht (21) ein Teil der zwischen den Wellenleiterkernen (19) liegenden ersten und zweiten Mantelglasschichten (17, 21), derart mittels Ätzen entfernt wird, daß eine Anzahl von voneinander getrennten Wellenleitern (20) auf dem Substrat (15) verbleibt und daß jeder Wellenleiter (20) einen vollständig von den Mantelglasschichten (17, 21) umgebenen Wellenleiterkern (19) aufweist, und daß gleichzeitig das zumindest teilweise Entfernen der Trennschicht (16) erfolgt, die eine höhere Ätzrate aufweist als die erste Mantelglasschicht (17).

7. Verfahren nach Anspruch 5 oder 6, **dadurch gekennzeichnet, daß** ein Trennätzschritt zum Entfernen der Trennschicht (16) mehrfach während des Schrittes g wiederholt wird.

## Claims

1. Process for the production of a waveguide beam converter for the geometrical shaping of an input laser beam bundle which is emitted by a laser diode array, contains a number of individual laser beams and has an input beam pattern, in which a number of waveguides (3 - 7) are produced and arranged in such a way that at least one individual laser beam can be injected into each waveguide (3 - 7), and in which the waveguides (3 - 7) are formed and arranged in such a way that an output laser beam bundle having an output beam pattern can be extracted from them, **characterized in that** the waveguides (3 - 7) are firstly produced by means of planar technology on a substrate (1, 15), and **in that** subsequently at least one of the waveguides (3 - 7) is detached from the substrate (1, 15) over a part of its length, starting from its beam exit end (9), and curved and fastened according to the output beam pattern of the output laser beam bundle.

2. Process according to Claim 1, **characterized in that** the laser diode array (11) and/or a number of coupling lenses (12) for forming the individual laser beams of the input laser beam bundle or for forming the output laser beam bundle are arranged on the same substrate (1, 15) as the waveguides (3 - 7).

3. Process according to Claim 1 or 2, **characterized in that** the waveguides (3 - 7) are made from a glass containing more than 50 cation % of SiO2.

4. Process according to one of Claims 1 to 3, **characterized in that** a number of waveguides (3 - 7) are detached from the substrate (1, 15), at least over a first part of their length, and remain connected to the substrate (1, 15) over a second part of their length, the respective first parts of the waveguides in question, which can move relative to the second parts, being produced by the following process steps:
a) production of the substrate (1, 15),
b) application of a partition layer (16) to the substrate (1),
c) application of a first cladding glass layer (17) to the partition layer (16),
d) application of a core layer (18) to the first cladding glass layer (17),
e) structuring the core layer (18), so that a number of waveguide cores (19) separated from one another remain on the first cladding glass layer (17),
f) application of a second cladding glass layer (21) to the waveguide cores (19) and to the free subregions (20) of the first cladding glass layer (17) between the waveguide cores (19), in such a way that the waveguide cores (19) are fully enclosed by the cladding glass layers (17, 21),
g) removal of a part of the first and second cladding glass layers (17, 21) lying between the waveguide cores (19), in such a way that a number of waveguides (22) separated from one another remain on the substrate (1, 15), and that each waveguide (22) has a waveguide core (19) fully enclosed by the cladding glass layers (17, 21), and
h) detachment of the waveguide (22) from the substrate (15) over the first part of its length.

5. Process for the production of at least one waveguide (22) on a substrate (15), the waveguide being detached from the substrate (15) at least over a first part of its length and being connected to the substrate (15) over a second part of its length, **characterized in that** the first part of the waveguide (20), which can move relative to the second part of its length, is produced by the following process steps:
(a) production of the substrate (15),
(b) application of a partition layer (16) to the substrate (15),
(c) application of a first cladding glass layer (17) to the partition layer (16),
(d) production of a waveguide core (19), consisting of a core layer (18), on the first cladding glass layer (17),
(e) application of a second cladding glass layer (21) to the waveguide core (19) and to free subregions (20) of the first cladding glass layer (17) next to the waveguide core (19), in such a way that the waveguide core (19) is fully enclosed by the first and second cladding glass layer (17, 21),
(f) at least partial removal of the partition layer (16) between the first cladding glass layer (17) and the substrate (15), and
(g) removal of the substrate material below the waveguide (20) - formed by the cladding glass layers (17, 21) and the waveguide core (19) - over the first part of its length, so that the said waveguide is detached from the substrate (15) over the said length.

6. Process according to Claim 5 for the simultaneous production of a plurality of waveguides on a substrate (15), **characterized in that**, in step d, a plurality of waveguide cores (19) arranged next to one another are produced on the first cladding glass layer (17), **in that**, after the application of the second cladding glass layer (21), a part of the first and second cladding glass layers (17, 21) lying between the waveguide cores (19) is removed by means of etching in such a way that a number of waveguides (20) separated from one another remain on the substrate (15) and that each waveguide (20) has a waveguide core (19) fully enclosed by the cladding glass layers (17, 21), and **in that**, at the same time, the partition layer (16) is at least partially removed, the said partition layer having a higher etching rate than the first cladding glass layer (17).

7. Process according to Claim 5 or 6, **characterized in that** a partition etching step for removing the partition layer (16) is repeated a number of times during step g.

## Revendications

1. Procédé de fabrication d'un convertisseur de rayon pour guide d'ondes pour déformer géométriquement un faisceau de rayons laser d'entrée présentant une pluralité de rayons laser individuels émis par un réseau de diodes laser et ayant un dessin de rayon d'entrée, avec lequel une pluralité de guides d'ondes (3-7) est fabriquée et disposée de manière à ce qu'au moins un rayon laser individuel puisse être injecté dans chaque guide d'ondes (3-7) et avec lequel les guides d'ondes (3-7) sont façonnés et disposés de telle manière qu'un faisceau de rayons laser de sortie ayant un dessin de rayon de sortie puisse être émis à partir d'eux, **caractérisé en ce que** les guides d'ondes (3-7) sont initialement fabriqués sur un substrat (1, 15) au moyen d'une technique planaire et qu'ensuite au moins l'un des guides d'ondes (3-7) est détaché du substrat (1, 15) sur une partie de sa longueur en partant de son extrémité de sortie des rayons (9) puis courbé et fixé en fonction du dessin de rayon de sortie du faisceau de rayons laser de sortie.

2. Procédé selon la revendication 1, **caractérisé en ce que** le réseau de diodes laser (11) et/ou une pluralité d'optiques de couplage (12) destinées à former les rayons laser individuels du faisceau de rayons laser d'entrée ou à former le faisceau de rayons laser de sortie est appliqué sur le même substrat (1, 15) que les guides d'ondes (3-7).

3. Procédé selon la revendication 1 ou 2, **caractérisé en ce que** les guides d'ondes (3-7) sont fabriqués dans un verre qui présente plus de 50 % de cations de SiO2.

4. Procédé selon l'une des revendications 1 à 3, **caractérisé en ce qu'**une pluralité de guides d'ondes (3-7) est détachée du substrat (1, 15) sur au moine une première partie de sa longueur et reste attaché au substrat (1, 15) sur une deuxième partie de sa longueur, la première partie de chaque guide d'ondes, à chaque fois mobile par rapport à la deuxième partie, étant produite avec les étapes suivantes du procédé :
a) Fabrication du substrat (1, 15),
b) Application d'une couche de séparation (16) sur le substrat (1),
c) Application d'une première couche de verre d'enveloppe (17) sur la couche de séparation (16),
d) Application d'une couche d'âme (18) sur la première couche de verre d'enveloppe (17),
e) Structuration de la couche d'âme (18) de manière à ce qu'une pluralité d'âmes de guide d'ondes séparées (19) demeure sur la première couche de verre d'enveloppe (17),
f) Application d'une deuxième couche de verre d'enveloppe (21) sur les âmes de guide d'ondes (19) et sur les zones partielles libres (20) de la première couche de verre d'enveloppe (17) entre les âmes de guide d'ondes (19) de manière à ce que les âmes de guide d'ondes (19) soient entièrement entourées par les couches de verre d'enveloppe (17, 21),
g) Enlèvement d'une partie des première et deuxième couches de verre d'enveloppe (17, 21) qui se trouvent entre les âmes de guide d'ondes (19) de manière à ce qu'une pluralité de guides d'ondes (22) séparés les uns des autres demeure sur le substrat (1, 15) et que chaque guide d'ondes (22) présente une âme de guide d'ondes (19) entièrement entourée par les couches de verre d'enveloppe (17,21), et
h) Détachement des guides d'ondes (22) du substrat (15) sur la première partie de leur longueur.

5. Procédé de fabrication d'au moins un guide d'ondes (22) sur un substrat (15), lequel est détaché du substrat (15) sur au moins une première partie de sa longueur et relié au substrat (15) sur une deuxième partie de sa longueur, **caractérisé en ce que** la première partie du guide d'ondes (20) qui est mobile sur sa longueur par rapport à la deuxième partie est produite avec les étapes suivantes du procédé :
a) Fabrication du substrat (15),
b) Application d'une couche de séparation (16) sur le substrat (15),
c) Application d'une première couche de verre d'enveloppe (17) sur la couche de séparation (16),
d) Fabrication d'une âme de guide d'ondes (19) composée d'une couche d'âme (18) sur la première couche de verre d'enveloppe (17),
e) Application d'une deuxième couche de verre d'enveloppe (21) sur les âmes de guide d'ondes (19) et sur les zones partielles libres (20) de la première couche de verre d'enveloppe (17) à côté des âmes de guide d'ondes (19) de manière à ce que les âmes de guide d'ondes (19) soient entièrement entourées par les première et deuxième couches de verre d'enveloppe (17, 21),
f) Enlèvement au moins en partie de la couche de séparation (16) entre la première couche de verre d'enveloppe (17) et le substrat (15), et
g) Enlèvement du matériau du substrat sous le guide d'ondes (20) formé par les couches de verre d'enveloppe (17, 21) et les âmes de guide d'ondes (19) sur la première partie de sa longueur de manière à ce que celui-ci soit détaché du substrat (15) sur cette longueur.

6. Procédé selon la revendication 5 pour fabriquer simultanément une pluralité de guides d'ondes sur un substrat (15), **caractérisé en ce qu'**à l'étape d une pluralité d'âmes de guide d'ondes (19) disposées les unes à côté des autres est fabriquée sur la première couche de verre d'enveloppe (17), qu'après l'application de la deuxième couche de verre d'enveloppe (21) une partie des première et deuxième couches de verre d'enveloppe (17, 21) qui se trouvent entre les âmes de guide d'ondes (19) est retirée par corrosion de manière à ce qu'une pluralité de guides d'ondes (20) séparés les uns des autres demeure sur le substrat (15) et que chaque guide d'ondes (20) présente une âme de guides d'onde (19) complètement entourée de couches de verre d'enveloppe (17, 21) et que l'enlèvement au moins partiel de la couche de séparation (16), laquelle présente une vitesse de corrosion supérieure à la première couche de verre d'enveloppe (17) a lieu en même temps.

7. Procédé selon la revendication 5 ou 6, **caractérisé en ce qu'**une étape de corrosion de séparation destinée à enlever la couche de séparation (16) est répétées plusieurs fois pendant l'étape g.
